# NOUVEAU FASCICULE DE BREVET EUROPEEN

(11) **EP 1 520 123 B2**
(45) Date de publication et mention de la décision concernant l'opposition: **14.03.2012**
(45) Mention de la délivrance du brevet: 11.07.2007
(21) Numéro de dépôt: 03724759.0
(22) Date de dépôt: 27.05.2003
(51) Int. Cl.: F16H 55/16, F16H 35/10

(54) **ENGRENAGE DE PRECISION**
PRÄZISIONSZAHNRADGETRIEBE
GEAR FOR PRECISION DEVICES

(30) Priorité: 10.07.2002 EP 02405583
(43) Date de publication de la demande: 06.04.2005
(73) Titulaire: Technical Watch Research Limited, Wickford Essex SS11 8AB (GB)
(72) Inventeur: WIEDERRECHT, Jean-Marc, CH-1233 Bernex (CH)
(74) Mandataire: Richard, François-Régis
(86) Numéro de dépôt international: PCT/CH2003/000333
(87) Numéro de publication internationale: WO 2004/008004

(56) Documents cités:
- EP-B1- 1 744 081
- FR-A- 2 379 736
- GB-A- 1 106 636
- US-B1- 4 473 301
- PATENT ABSTRACTS OF JAPAN vol. 008, no. 112 (M-298), 25 mai 1984 (1984-05-25) & JP 59 019768 A (NISSAN JIDOSHA KK), 1 février 1984 (1984-02-01)
- G.-A. BERNER: ''Dictionnaire professionnel illustré de l'horlogerie I + II.', 2002, LA CHAMBRE SUISSE DE L'HORLOGERIE, LA CHAUX-DE-FONDS article 'Société du Journal La Suisse Horlogère SA, Définition No 1637A, pages 382 et 384', pages 308 - 309

## Description

La présente invention se rapporte au domaine des engrenages. Elle concerne, plus particulièrement, un perfectionnement apporté aux dents des roues d'engrenages, notamment en vue de leur utilisation dans des mécanismes de précision, tels que ceux utilisés en horlogerie.

Les constructeurs horlogers emploient des engrenages présentant un ébat ou un jeu, c'est-à-dire une différence d'épaisseur, entre les dents des roues des deux mobiles coopérant l'un avec l'autre. Cela permet de pallier les éventuels défauts dimensionnels des roues.

Malheureusement, la présence d'ébats dans les engrenages constitue aussi un inconvénient, du fait de l'addition des jeux, lorsqu'il s'agit, notamment dans une montre, d'afficher la seconde ou la minute de manière décentrée. L'aiguille risque fort, alors, de "flotter" sur les marques fixes du cadran. Un tel défaut est particulièrement pénalisant pour les produits « haut de gamme ».

Diverses solutions ont été proposées pour compenser les défauts d'engrenages.

Par exemple, le document FR 2 379 736 montre les caractéristiques de la première partie de la revendication 1 et propose que les dents de l'un des mobiles soient pourvues d'une fente radiale pratiquée à leur sommet et que cette fente débouche dans un évidement, ce qui les rend élastiquement déformables au moment de leur contact avec les dents opposées de l'autre mobile. Une telle solution souffre cependant du fait que les dents risquent ainsi d'être trop fragilisées et/ou de ne pas avoir une rigidité suffisante pour transmettre, avec un rendement satisfaisant, une énergie importante fournie par un couple élevé. Par ailleurs, ce document est complètement silencieux quant à l'ébat de l'engrenage.

La présente invention a pour but de fournir un engrenage de précision exempt des inconvénients dus à son ébat, tout en étant capable de déformation élastique en cas de serrage mais conservant une rigidité suffisante pour restituer la force transmise avec un rendement optimal.

De façon plus précise, l'invention concerne un engrenage de précision comportant les caractéristiques de la revendication 1.

D'autres caractéristiques de l'invention ressortiront de la description qui va suivre, faite en regard du dessin annexé dans lequel :
- la figure 1 représente un exemple de réalisation d'un engrenage selon l'invention, et
- la figure 2 est une vue agrandie d'une dent de l'engrenage de la figure 1.

Le dessin montre un engrenage formé d'une roue 10 à quarante cinq dents 12 et d'un pignon 14 à quinze dents 16 coopérant ensemble. Le cercle primitif de ces mobiles est représenté en 18 et leur cercle de pied en 20. Ces mobiles peuvent être réalisés aussi bien en matériau plastique qu'en métal (laiton, ....).

Selon l'invention, l'engrenage est sans ébat - ou sans jeu -, c'est-à-dire que les dents 12 de la roue et les dents 16 du pignon ont une épaisseur e (pour l'homme de métier, valeur prise au niveau du cercle primitif 18) telle qu'il n'y a pas d'espace -ou jeu- entre elles.

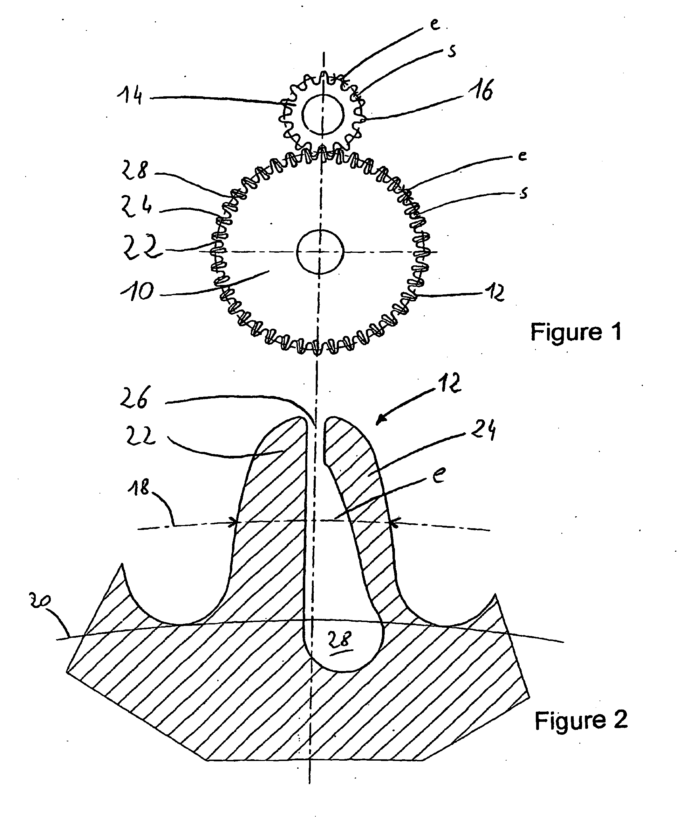

Comme le montre mieux la figure 2, les dents 12 de la roue 10 sont séparées en deux moitiés 22 et 24 par un fente radiale 26, c'est-à-dire formée selon un rayon du mobile.

Dans l'exemple représenté, la fente 26 s'étend légèrement au-delà du cercle de pied 20 et a, au sommet des dents, une largeur correspondant sensiblement à l'ébat qu'aurait l'engrenage s'il était de type classique.

La demi-dent 22 est entière, alors que la demi-dent 24 est affaiblie par un évidement 28 allant en s'élargissant de son sommet vers le cercle de pied 20. Typiquement, l'épaisseur de la demi-dent 24, au niveau du cercle primitif 18, est environ la moitié de celle de la demi-dent 22.

Bien entendu, la présente description n'a été donnée qu'à titre d'exemple. Il va de soi que la longueur et la largeur de la fente radiale 26 ainsi que la forme et la dimension de l'évidement 28 peuvent être adaptées, en fonction de l'application visée, pour permettre la déformation élastique de la demi-dent 24 la mieux appropriée.

Ainsi est réalisé un engrenage sans ébat dans lequel, d'une part, la demi-dent entière 22 possède une rigidité suffisante pour assurer correctement la transmission de forces importantes et, d'autre part, la demi-dent amincie 24 possède une élasticité lui permettant, dans un premier temps, de céder en cas de serrage, puis de transmettre la force après l'appui contre l'autre demi-dent.

## Revendications

1. Engrenage de précision, comportant au moins deux roues dentées (10, 14) coopérant l'une avec l'autre, et étant sans ébat, dans lequel:
- les dents (12) de l'une des roues (10) sont dotées d'une fente radiale (26) qui les divise en deux demi-dents (22, 24), et
- l'une de ces demi-dents (24) comporte un évidement (28) lui permettant de se déformer élastiquement en cas de serrage,
**caractérisé en ce que** l'autre demi-dent (22) est entière et possède une rigidité suffisante pour assurer correctement la transmission des forces auxquelles elle est soumise, les dents (12, 16) des deux roues ayant la même épaisseur (e).

2. Engrenage selon la revendication 1, **caractérisé en ce que** ladite fente radiale (26) s'étend légèrement au-delà du cercle de pied (20) de la roue.

3. Engrenage selon l'une des revendications 1 et 2, **caractérisé en ce que** ladite fente radiale (26) a, au sommet des dents (12), une largeur correspondant sensiblement à l'ébat qu'aurait l'engrenage s'il était de type classique.

4. Engrenage selon l'une des revendications 1 à 3, **caractérisé en ce que** ledit évidement (28) va en s'élargissant du sommet des dents vers le cercle de pied (20) de la roue.

5. Engrenage selon l'une des revendications 1 à 4, **caractérisé en ce que** l'épaisseur de la demi-dent évidée (24), au niveau du cercle primitif (18) de la roue, est sensiblement la moitié de celle de l'autre demi-dent (22).

## Claims

1. Gear for precision devices comprising at least two toothed wheels (10, 14) cooperating with each other and without any clearance, wherein:
- the teeth (12) of one of the wheels (10) are provided with a radial slot (26) which divides them into two half-teeth (22, 24),
- one of said half-teeth (24) comprises a recess (28) enabling it to be deformed elastically upon compression,
**characterized in that** the other half-tooth (22) is complete and has sufficient rigidity to properly ensure transmission of the forces to which it is subjected, the teeth (12, 16) of the two wheels exhibiting a same thickness (e).

2. Gear according to claim 1, **characterized in that** said radial slot (26) extends slightly beyond the pitch circle (20) of the wheel.

3. Gear according to any of claims 1 and 2, **characterized in that**, at the tip of the teeth (12), said radial slot (26) has a width substantially corresponding to the clearance that the gear would have if it were of the conventional type.

4. Gear according to any of claims 1 to 3, **characterized in that** said recess (28) enlarges increasingly from the tip of the teeth towards the pitch circle (20) of the wheel.

5. Gear according to any of claims 1 to 4, **characterized in that** the thickness of the hollowed half-tooth (24), on the pitch circle (18) of the wheel is substantially half that of the other half-tooth (22).

## Patentansprüche

1. Präzisions-Zahnradgetriebe mit mindestens zwei Zahnrädern (10, 14), die zusammenwirken und kein Spiel haben, bei dem:
- die Zähne (12) des einen Rads (10) mit einem radialen Schlitz (26) versehen sind, der sie in zwei Halbzähne (22, 24) teilt, und
- einer dieser Halbzähne (24) eine Aussparung (28) aufweist, die es ihm ermöglicht, sich im Fall des Festklemmens elastisch zu verformen,
**dadurch gekennzeichnet, dass** der andere Halbzahn (22) ganz ist und eine ausreichende Steifheit aufweist, um die Übertragung der Kräfte, denen er ausgesetzt ist, korrekt zu gewährleisten und dass die Zähne (12, 16) der beiden Räder eine gleiche Dicke aufweisen.

2. Zahnradgetriebe nach Anspruch 1, **dadurch gekennzeichnet, dass** der radiale Schlitz (26) sich leicht über den Fußkreis (20) des Rads hinaus erstreckt.

3. Zahnradgetriebe nach einem der Ansprüche 1 und 2, **dadurch gekennzeichnet, dass** der radiale Schlitz (26) an der Kopfkante der Zähne (12) eine Breite hat, die im Wesentlichen dem Spiel entspricht, das das Zahnradgetriebe hätte, wenn es vom klassischen Typ wäre.

4. Zahnradgetriebe nach einem der Ansprüche 1 bis 3, **dadurch gekennzeichnet, dass** die Aussparung (28) sich von der Kopfkante zum FuBkreis (20) des Rads hin ausweitet.

5. Zahnradgetriebe nach einem der Ansprüche 1 bis 4, **dadurch gekennzeichnet, dass** die Dicke des ausgesparten Halbzahns (24) in Höhe des Teilkreises (18) des Rads im Wesentlichen die Hälfte der Dicke des anderen Halbzahns (22) ist.
